# FASCICULE DE BREVET EUROPEEN

(11) **EP 2 461 077 B1**
(45) Date de publication et mention de la délivrance du brevet: **05.11.2014**
(21) Numéro de dépôt: 10015214.9
(22) Date de dépôt: 02.12.2010
(51) Int. Cl.: F16L 3/10

(54) **Collier de fixation pour tuyaux**
Befestigungsschelle für Rohre
Securing collar for pipes

(43) Date de publication de la demande: 06.06.2012
(73) Titulaire: Samvaz S.A., 1618 Châtel-St-Denis (CH)
(72) Inventeur: Derivaz, François, 1618 Châtel-St-Denis (CH)
(74) Mandataire: Micheli & Cie SA

(56) Documents cités:
- DE-A1- 3 808 140
- DE-U1- 29 910 505
- JP-A- 11 063 302
- JP-A- 11 153 261
- JP-A- 2000 055 241
- JP-A- 2000 205 453

## Description

La présente invention a pour objet un collier de fixation comprenant une partie isolante et permettant de fixer au plafond, contre un mur ou sur le sol tout type de tuyau conduisant un fluide.

Un tel collier de fixation se compose généralement d'un corps principal constitué de deux brides métalliques destinées à être fixées l'une à l'autre au moyen de vis ou de charnières pour former un collier. Une des brides présente des moyens de fixation permettant de fixer le collier contre un mur. Le collier comprend encore une partie isolante composée de deux coques fixées chacune à l'intérieur d'une bride et qui une fois le collier serré autour d'un tuyau forme un manchon isolant le corps principal métallique dudit tuyau. Ainsi, que le tuyau conduise un fluide froid ou chaud, les brides métalliques ne craignent pas l'oxydation due à la condensation ni la déformation due à la chaleur.

De telles coques sont généralement réalisées en mousse de polyuréthane, connue pour ses propriétés thermiques. En utilisant de la mousse de polyuréthane injectée, on obtient des coques pleines et capables de résister à une température allant de -100° à + 100°. Cependant, la réalisation de telles coques pleines est coûteuse en matière première et en temps : en effet, d'une part, la mousse de polyuréthane est un matériau relativement cher, et d'autre part, la polymérisation de la mousse de polyuréthane pour réaliser une forme pleine peut prendre environ 10 minutes après lesquelles il faut encore fixer chaque coque sur chaque bride en les vissant par exemple.

Le document JP11-153261 A décrit un collier de fixation selon le préambule de la revendication 1, ainsi qu'une partie isolante selon le préambule de la revendication 4.

Le but de la présente invention est de réaliser un collier de fixation comprenant une partie isolante qui soit plus économique en terme de temps et de matière première nécessaires à sa fabrication, tout en conservant une bonne efficacité et des bonnes propriétés d'isolation.
La présente invention a pour objet un collier de fixation permettant de fixer contre un mur, sur le sol ou au plafond tout type de tuyau conduisant un fluide, le collier de fixation comprenant un corps principal et une partie isolante, le corps principal étant constitué d'au moins deux brides pouvant être assemblées pour former un collier et présentant un élément de fixation permettant de fixer le tuyau contre un mur, sur le sol ou au plafond, la partie isolante étant destinée à isoler le corps principal dudit tuyau, la partie isolante comprenant au moins deux corps isolants renfermant chacun au moins une alvéole hermétique et remplie d'air, caractérisé par le fait que chaque corps isolant est formé d'au moins deux coques s'emboîtant d'une part l'une avec l'autre et d'autre part sur une bride du corps principal, lesdites au moins deux coques de chaque corps isolant étant conformées de sorte qu'une fois soudées ensemble, elles forment autour du corps principal un corps isolant renfermant au moins une alvéole hermétique et remplie d'air.

Les dessins annexés illustrent schématiquement et à titre d'exemple une forme d'exécution d'un collier de fixation selon l'invention.
La figure 1 illustre un collier de fixation selon l'invention.
La figure 2 est une vue de face du collier de fixation illustré à la figure 1.
La figure 3 est une vue en coupe selon l'axe III-III du collier de fixation illustré à la figure 2.
La figure 4 illustre le corps principal du collier de fixation illustré à la figure 1.
Les figures 5a et 5b sont des vues en perspective d'une coque mâle, respectivement femelle constituant la partie isolante d'un collier de fixation selon l'invention.
Les figures 6a et 6b sont des vues de côté des coques illustrées respectivement aux figures 5a, 5b.
Les figures 7a et 7b sont des vues en coupe selon l'axe VII-VII des coques illustrées respectivement aux figures 6a et 6b.
La figure 8 illustre la juxtaposition de deux coques mâles et de deux coques femelles constituant la partie isolante d'un collier selon l'invention et telles qu'illustrées aux figures 5a et 5b.

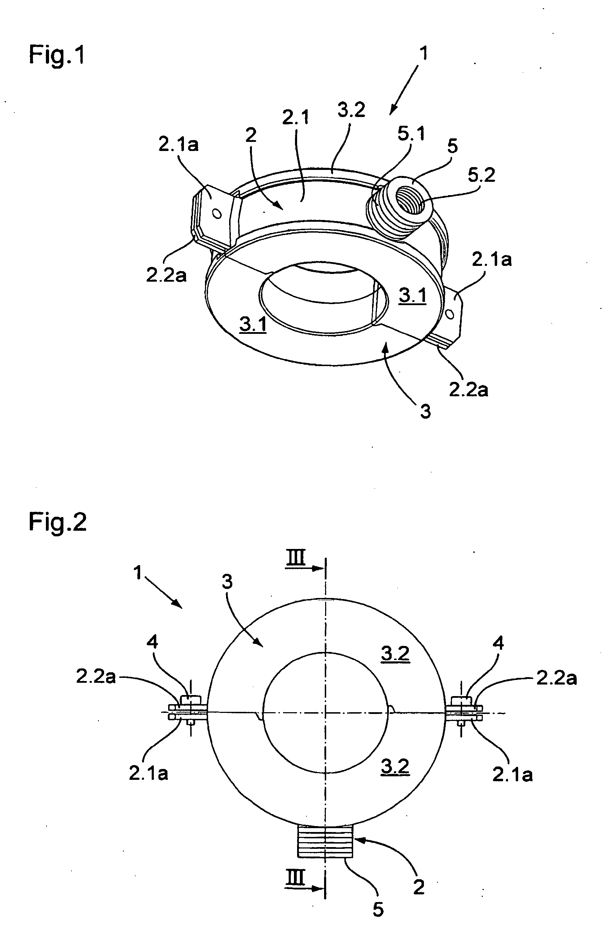

Les figures 1 à 3 illustrent une forme d'exécution d'un collier de fixation 1 selon l'invention. Ledit collier 1 comprend un corps principal 2 et une partie isolante 3.

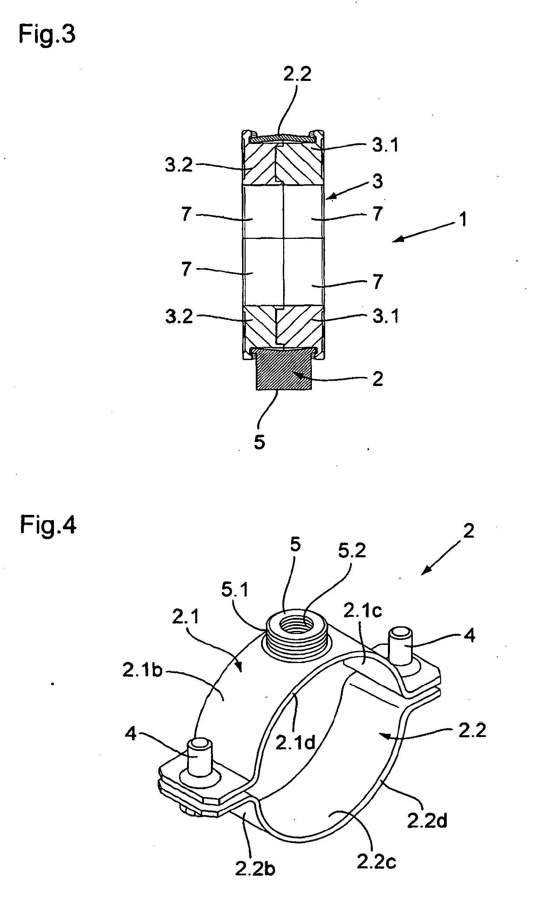

Le corps principal 2 illustré à la figure 4 comprend de préférence deux brides 2.1, 2.2 de forme essentiellement semi-circulaire, présentant chacune deux extrémités 2.1 a, 2.2a. Les brides 2.1, 2.2 sont destinées à être assemblées l'une à l'autre à leurs extrémités 2.1 a, 2.2a par des moyens appropriés pour former un collier. De préférence et comme illustré aux figures, les brides 2.1 et 2.2 sont assemblées au moyen de vis 4.

De préférence et dans la forme d'exécution illustrée, les brides 2.1, 2.2 ont une forme semi-circulaire et présentent chacune une face extérieure 2.1 b, 2.2b une face intérieure 2.1 c, 2.2c ainsi qu'un premier côté 2.1 d, 2.2d et un second côté (non visible sur les dessins).

Au moins une des brides 2.1 présente des moyens de fixation pour permettre la fixation du collier 1 selon l'invention contre un mur, au sol ou au plafond. De préférence et comme illustré aux figures, ces moyens de fixation sont constitués d'un manchon 5 solidaire de la bride 2.1 sur sa face extérieure 2.1 b et s'étendant sensiblement perpendiculairement à ladite face extérieure 2.1b. Ce manchon 5 peut présenter un filetage 5.1 permettant de visser ladite bride 2.1 et donc le collier 1 dans un support adéquat (non illustré) préalablement fixé contre un mur, au sol ou au plafond. Le manchon 5 peut encore être percé d'un trou taraudé 5.2 permettant de fixer directement la bride 2.1 contre un mur, au sol ou au plafond.

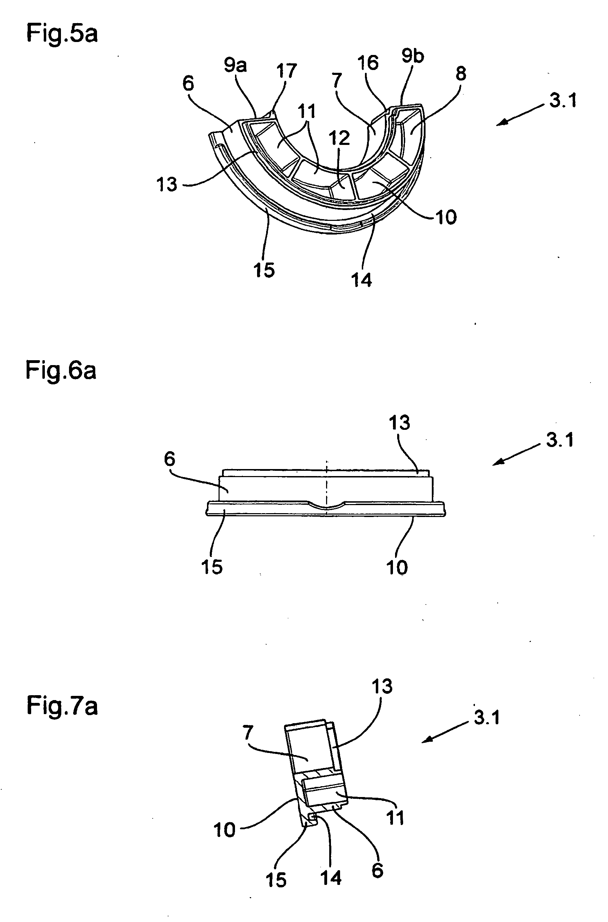

La partie isolante 3 du collier 1 de fixation selon l'invention est illustrée en particulier aux figures 5a à 8. La partie isolante 3 est composée de deux corps creux et hermétiques, s'emboîtant chacun sur une bride 2.1, 2.2 du corps principal et coopérant ensemble pour isoler les brides 2.1, 2.2 du tuyau qu'elles enserrent. Chaque corps creux est constitué d'une coque mâle 3.1 et d'une coque femelle 3.2. La partie isolante 3 comprend donc quatre coques : deux coques mâles 3.1 et deux coques femelles 3.2.

Une coque mâle 3.1 est illustrée aux figures 5a, 6a et 7a.

Une coque mâle 3.1 comprend une paroi extérieure 6 de préférence semi-circulaire, une paroi intérieure 7 de préférence semi-circulaire, concentrique à la paroi extérieure 6, dont la courbure est orientée sensiblement selon la même direction que la courbure de la paroi extérieure 6 et dont le diamètre est plus petit que celui de la paroi extérieure 6. Les parois extérieure 6 et intérieure 7 sont donc séparées par un espace 8 délimité en outre par deux parois latérales 9a, 9b reliant les parois extérieure 6 et intérieure 7, de préférence selon un diamètre desdites parois et par une paroi inférieure 10 essentiellement perpendiculaire aux parois extérieure 6, intérieure 7 et latérales 9. L'espace 8 a donc la forme d'un croissant.

La paroi intérieure 7 de la coque mâle 3.1 est destinée à être en contact avec le tuyau fixé par le collier de fixation 1 selon l'invention.

De préférence, l'espace 8 est séparé en plusieurs alvéoles 11 délimitées par des séparations 12 situées entre les parois extérieure 8 et intérieure 7. De préférence, les séparations 12 suivent chacune un diamètre des parois extérieure 6 et intérieure 7.

Les parois extérieure 6, intérieure 7 et latérales 9a, 9b ont la même hauteur et présentent chacune à une hauteur déterminée et sur leur face extérieure une découpe créant une portion saillante 13 qui constitue la partie mâle de la coque mâle 3.1 et qui est destinée à coopérer avec une partie femelle d'une coque femelle 3.2 décrite plus bas.

La paroi inférieure 10 s'étend radialement par rapport à la paroi extérieure 6 pour former une rainure 14 semi-circulaire et délimitée par un rebord 15 lui aussi semi-circulaire.

La paroi extérieure 6, la rainure 14 et le rebord 15 sont conformés de sorte qu'un premier côté 2.1d d'une bride 2.1 décrite ci-dessus puisse venir s'emboîter dans la rainure 14, la paroi extérieure 6 de la coque mâle 3.1 épousant la paroi intérieure 2.1 c de la bride 2.1 et le rebord 15 couvrant une partie de la face extérieure 2.1b de ladite bride 2.1.

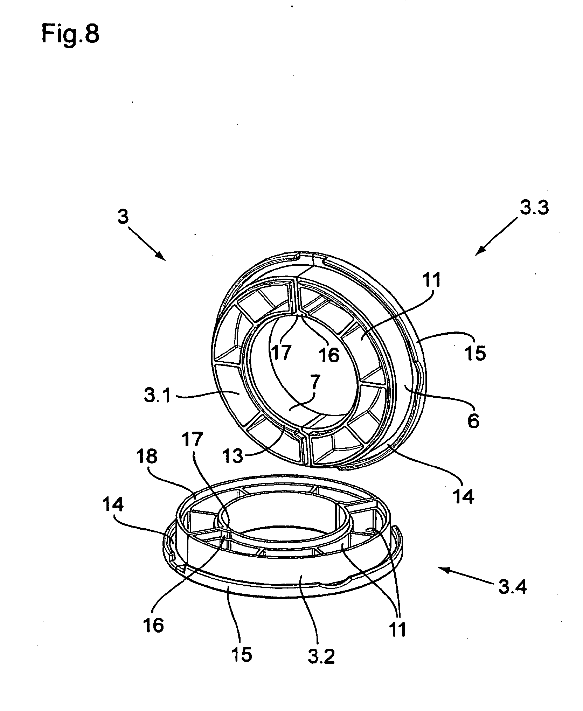

Dans la forme d'exécution illustrée, les deux coques mâles 3.1 sont essentiellement identiques et une fois juxtaposées pour amener leurs parois latérales 9a, 9b en contact sur toute leur surface, elles forment un anneau mâle 3.3. Ledit anneau mâle 3.3 est illustré à la figure 8 et est constitué de deux coques mâles 3.1.

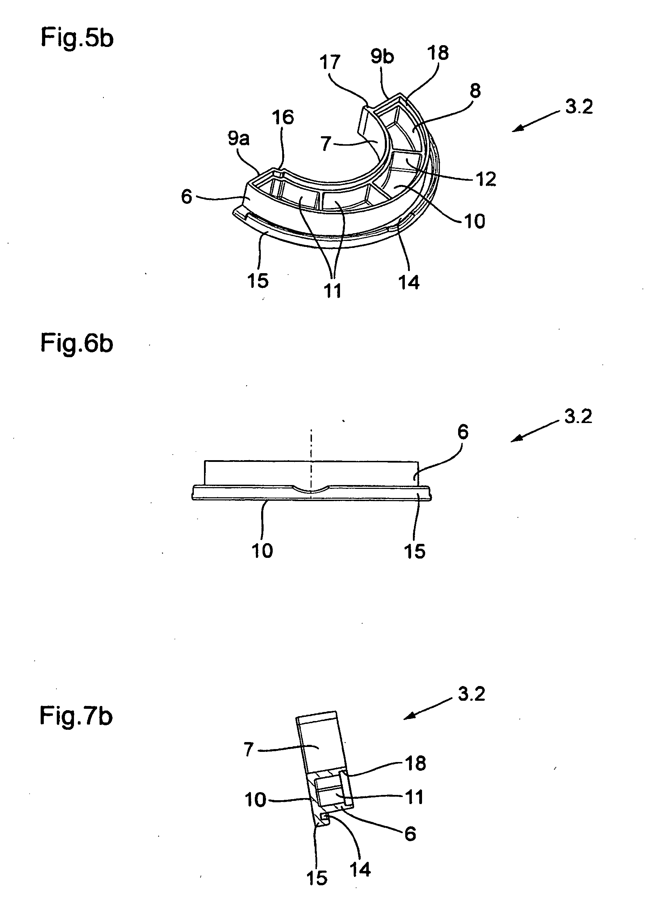

Une coque femelle 3.2 est quant à elle illustrée aux figures 5b, 6b et 7b.

Une coque femelle 3.2 est en tout point identique à une coque mâle 3.1 à l'exception qu'elle ne présente pas de portion saillante 13. Les mêmes références seront donc utilisées pour décrire les mêmes éléments.

Les parois extérieure 6, intérieure 7 et latérales 9a, 9b d'une coque femelle 3.2 présentent une découpe sur leur face intérieure (extérieure pour la coque mâle 3.1) créant ainsi une creusure 18 tout autour de l'espace 8, ladite creusure 18 d'une coque femelle 3.2 étant conformée pour recevoir la portion saillante 13 d'une coque mâle 3.1. Ainsi, une coque mâle 3.1 s'emboîte par sa portion saillante 13 dans une coque femelle 3.2, pour former un corps creux en forme de C ou de croissant.

Tout comme la coque mâle 3.1, une coque femelle 3.2 est destinée à s'emboîter par sa rainure 14 sur un second côté 2.1e de la bride 2.1. De même, la paroi intérieure 7 de la coque femelle 3.2 est destinée à être en contact avec le tuyau fixé par le collier de fixation 1 selon l'invention. Finalement, dans la forme d'exécution illustrée, les deux coques femelles 3.2 sont essentiellement identiques et une fois juxtaposées pour amener leurs parois latérales 9a, 9b en contact sur toute leur surface, elles forment un anneau femelle 3.4. Ledit anneau femelle 3.4 est illustré à la figure 8 et est constitué de deux coques femelles 3.2.

Le montage de la partie isolante 3 sur le corps principal 2 du collier de fixation 1 selon l'invention comprend les étapes suivantes :
1. Sur chacun des premier et second côtés 2.1d, 2.1e d'une bride 2.1 du corps principal 2 viennent s'emboîter respectivement une coque mâle 3.1 et une coque femelle 3.2 qui elles-mêmes s'emboîtent l'une avec l'autre, la portion saillante 13 de la coque mâle 3.1 s'insérant dans la creusure 18 de la coque femelle 3.2. La bride 2.1 est ainsi prise en « sandwich » entre la coque mâle 3.1 et la coque femelle 3.2.
2. Les coques mâles 3.1 et femelle 3.2 ainsi emboîtées et enserrant la bride 2.1 sont ensuite soudées l'une à l'autre le long de leur point de contact (parois extérieures 6, intérieures 7, latérales 9a, 9b, ce qui correspond au périmètre de l'espace 8), par des moyens appropriés par exemple par ultrasons. La soudure de la coque mâle 3.1 à la coque femelle 3.2 est hermétique de sorte que de l'air est emprisonné dans les alvéoles 11 de chacun des espaces 8 de chacune desdites coques.
3. Les étapes 1 et 2 sont répétées avec la seconde bride 2.2 et les seconde coque mâle 3.1 et seconde coque femelle 3.2.

On obtient ainsi un collier de fixation comprenant un corps principal 2 composé de deux brides métalliques 2.1, 2.2 et une partie isolante 3 creuse et alvéolée. Les brides 2.1, 2.2 sur chacune desquels sont emboîtées une coque mâle 3.1 et une coque femelle 3.2 sont ensuite placées autour du tuyau et fixées l'une à l'autre à leurs extrémité 2.1 a, 2.2a de manière à encercler ledit tuyau. Selon l'invention, ledit tuyau est donc en contact avec les parois intérieures 7 de chacune des coques mâles 3.1 et femelles 3.2 mais est isolé, par ces même coques, des brides 2.1, 2.2.

De préférence, les coques mâles 3.1 et femelles 3.2 sont réalisées en matière plastique injectée. Comme lesdites coques ne sont pas pleines, mais creuses et alvéolées, on réalise ainsi une importante économie de matière première coûteuse. De plus, la partie isolante 3 selon l'invention ne perd pas en efficacité puisque l'air emprisonné dans les alvéoles 11 des coques mâles et femelles 3.1, 3.2 lors de leur soudure agit comme un isolant thermique. Ainsi, l'expérience a montré que l'utilisation d'une partie isolante creuse et hermétique en matière plastique offre une isolation quasi similaire comparée à une partie isolante de l'art antérieur pleine en mousse de polyuréthane.

Alors qu'une coque mâle 3.1 est soudée hermétiquement à une coque femelle 3.2, les deux coques mâles 3.1 (resp. les deux coques femelles 3.2) ne sont pas soudées à leur point de contact lorsque les brides ont été fixées l'une à l'autre. Cette zone de contact, qui est la jonction entre les parois latérales 9a, 9b, des deux coques mâles (resp. femelles) peut constituer un pont thermique, la chaleur ou le froid pouvant potentiellement se dissiper par cette zone. Pour éviter ce potentiel défaut d'isolation, les deux parois latérales 9a, 9b d'une coque mâle 3.1 (resp. femelle 3.2) ne sont de préférence pas entièrement planes mais présentent à leurs extrémités la plus proche de la paroi intérieure 7 de la coque mâle 3.1, l'une une encoche 16 et l'autre une protubérance 17 correspondante, la protubérance 17 d'une première coque mâle 3.1 étant destinée à s'insérer dans l'encoche 16 d'une seconde coque mâle 3.2. Cette encoche 16 et cette protubérance 17 crée une rupture thermique empêchant une partie de la dissipation thermique le long de la zone de contacte entre les parois latérales des deux coques mâles 3.1 (resp. femelles 3.2). On fait de même pour les coques femelles 3.2.

De plus, lors du moulage d'un objet creux comme les coques de la partie isolante 3, le temps d'attente pour la polymérisation par injection de matière plastique est beaucoup plus court. La soudure des coques sur les brides à l'ultrason est une opération rapide, économique et moins fastidieuse que de visser les coques aux brides par exemple.

On réalise ainsi un collier de fixation comprenant une partie isolante économique en temps de réalisation et en coût de production sans sacrifier son efficacité outre mesure.

## Revendications

1. Collier de fixation (1) permettant de fixer contre un mur, sur le sol ou au plafond tout type de tuyau conduisant un fluide, le collier de fixation (1) comprenant un corps principal (2) et une partie isolante (3), le corps principal (2) étant constitué d'au moins deux brides (2.1, 2.2) pouvant être assemblées pour former un collier et présentant un élément de fixation (5) permettant de fixer le tuyau contre un mur, sur le sol ou au plafond, la partie isolante (3) étant destinée à isoler le corps principal (2) dudit tuyau, la partie isolante comprenant au moins deux corps isolants renfermant chacun au moins une alvéole (11) hermétique et remplie d'air, **caractérisé par le fait que** chaque corps isolant est formé d'au moins deux coques (3.1, 3.2) s'emboîtant d'une part l'une avec l'autre et d'autre part sur une bride (2.1, 2.2) du corps principal (2), lesdites au moins deux coques de chaque corps isolant étant conformées de sorte qu'une fois soudées ensemble, elles forment autour du corps principal (2) un corps isolant renfermant au moins une alvéole (11) hermétique et remplie d'air.

2. Collier selon la revendication précédente, **caractérisé par le fait que** le corps principal (2) est métallique.

3. Collier selon l'une des revendications précédentes, **caractérisé par le fait que** la partie isolante (3) est entièrement réalisée en matière plastique injectée.

4. Partie isolante pour un collier de fixation (1) permettant de fixer contre un mur, sur le sol ou au plafond tout type de tuyau conduisant un fluide, ledit collier de fixation (1) comprenant un corps principal (2) constitué d'au moins deux brides (2.1, 2.2) pouvant être assemblées pour former un collier et présentant un élément de fixation (5) permettant de fixer le tuyau contre un mur, sur le sol ou au plafond, ladite partie (3) isolante étant destinée à isoler le corps principal (2) dudit tuyau, lorsque la partie isolante (3) est montée sur ledit corps principal (2), ladite partie isolante (3) comprenant au moins deux corps isolants renfermant chacun au moins une alvéole (11) hermétique et remplie d'air, **caractérisée par le fait que** chaque corps isolant est formé d'au moins deux coques (3.1, 3.2) s'emboîtant d'une part l'une avec l'autre et d'autre part sur une bride (2.1, 2.2) du corps principal (2) du collier de fixation (1) lorsque la partie isolante est montée sur ledit corps principal (2), lesdites au moins deux coques de chaque corps isolant étant conformées de sorte qu'une fois soudées ensemble autour dudit corps principal (2), elles forment un corps isolant renfermant au moins une alvéole (11) hermétique et remplie d'air.

## Patentansprüche

1. Befestigungsschelle (1), die es ermöglicht, jede Art von Rohr, das ein Fluid leitet, an einer Wand, an dem Boden oder an der Decke zu befestigen, wobei die Befestigungsschelle (1) einen Hauptkörper (2) und einen isolierenden Teil (3) umfasst, wobei der Hauptkörper (2) aus mindestens zwei Flanschen (2.1, 2.2) gebildet ist, die zusammengebaut werden können, um eine Schelle zu bilden, und ein Befestigungselement (5) umfassen, das es ermöglicht, das Rohr an einer Wand, an dem Boden oder an der Decke zu befestigen, wobei der isolierende Teil (3) dazu bestimmt ist, den Hauptkörper (2) von dem Rohr zu isolieren, wobei der isolierende Teil mindestens zwei isolierende Körper umfasst, die jeweils mindestens eine hermetische und mit Luft gefüllte Zelle (11) einschließen, **dadurch gekennzeichnet, dass** jeder isolierende Körper aus mindestens zwei Schalen (3.1, 3.2) gebildet ist, die einerseits miteinander und andererseits auf einem Flansch (2.1, 2.2) des Hauptkörpers (2) ineinanderpassen, wobei die mindestens zwei Schalen von jedem isolierenden Körper derart angepasst sind, dass sie, nachdem sie zusammengeschweißt wurden, um den Hauptkörper (2) herum einen isolierenden Körper bilden, der mindestens eine hermetische und mit Luft gefüllte Zelle (11) einschließt.

2. Schelle nach dem vorhergehenden Anspruch, **dadurch gekennzeichnet, dass** der Hauptkörper (2) metallisch ist.

3. Schelle nach einem der vorhergehenden Ansprüche, **dadurch gekennzeichnet, dass** der isolierende Teil (3) vollständig aus gespritztem Kunststoff gefertigt ist.

4. Isolierender Teil für eine Befestigungsschelle (1), die es ermöglicht, jede Art von Rohr, das ein Fluid leitet, an einer Wand, an dem Boden oder an der Decke zu befestigen, wobei die Befestigungsschelle (1) einen Hauptkörper (2), der aus mindestens zwei Flanschen (2.1, 2.2) gebildet ist, die zusammengebaut werden können, um eine Schelle zu bilden, und ein Befestigungselement (5) umfassen, das es ermöglicht, das Rohr an einer Wand, an dem Boden oder an der Decke zu befestigen, wobei der isolierende Teil (3) dazu bestimmt ist, den Hauptkörper (2) von dem Rohr zu isolieren, wenn der isolierende Teil (3) an dem Hauptkörper (2) angebracht ist, wobei der isolierende Teil (3) mindestens zwei isolierende Körper umfasst, die jeweils eine hermetische und mit Luft gefüllte Zelle (11) einschließen, **dadurch gekennzeichnet, dass** jeder isolierende Körper aus mindestens zwei Schalen (3.1, 3.2) gebildet ist, die einerseits miteinander und andererseits auf einem Flansch (2.1, 2.2) des Hauptkörpers (2) der Befestigungsschelle (1) ineinanderpassen, wenn der isolierende Teil auf dem Hauptkörper (2) angebracht ist, wobei die mindestens zwei Schalen von jedem isolierenden Körper derart angepasst sind, dass sie, nachdem sie um den Hauptkörper (2) herum zusammengeschweißt wurden, einen isolierenden Körper bilden, der mindestens eine hermetische und mit Luft gefüllte Zelle (11) einschließt.

## Claims

1. Securing collar (1) permitting any type of fluid-carrying pipe to be secured against a wall, on the ground or to the ceiling, the securing collar (1) comprising a main body (2) and an insulating part (3), the main body (2) being formed by at least two flanges (2.1, 2.2) which can be assembled to form a collar and having a securing element (5) permitting the pipe to be secured against a wall, on the ground or to the ceiling, the insulating part (3) being intended to insulate the main body (2) from said pipe, the insulating part comprising at least two insulating bodies each enclosing at least one sealed, air-filled cell (11), **characterised in that** each insulating body is formed from at least two shells (3.1, 3.2) fitting together, on the one hand, with each other and, on the other hand, on a flange (2.1, 2.2) of the main body (2), said at least two shells of each insulating body being shaped so that, once welded together, they form, around the main body (2), an insulating body enclosing at least one sealed, air-filled cell (11).

2. Collar as claimed in the preceding claim, **characterised in that** the main body (2) is metallic.

3. Collar as claimed in any one of the preceding claims, **characterised in that** the insulating part (3) is entirely produced from injected plastic material.

4. Insulating part for a securing collar (1) permitting any type of fluid-carrying pipe to be secured against a wall, on the ground or to the ceiling, said securing collar (1) comprising a main body (2) formed by at least two flanges (2.1, 2.2) which can be assembled to form a collar and having a securing element (5) permitting the pipe to be secured against a wall, on the ground or to the ceiling, said insulating part (3) being intended to insulate the main body (2) from said pipe, when the insulating part (3) is mounted on said main body (2), said insulating part (3) comprising at least two insulating bodies each enclosing at least one sealed, air-filled cell (11), **characterised in that** each insulating body is formed from at least two shells (3.1, 3.2) fitting together, on the one hand, with each other and, on the other hand, on a flange (2.1, 2.2) of the main body (2) of the securing collar (1) when the insulating part is mounted on the main body (2), said at least two shells of each insulating body being shaped so that, once welded together around said main body (2), they form an insulating body enclosing at least one sealed, air-filled cell (11).
